# EUROPÄISCHE PATENTANMELDUNG

(11) **EP 4 574 616 A1**
(43) Veröffentlichungstag der Anmeldung: **25.06.2025**
(21) Anmeldenummer: 24213876.6
(22) Anmeldetag: 19.11.2024
(51) Int. Cl.: B61D 17/22, B62D 47/02, B60D 5/00

(54) **EINSTÜCKIGE VERKLEBTE BALGTEILE**

(30) Priorität: 21.12.2023 EP 23219250
(71) Anmelder: Hübner GmbH & Co. KG, 34123 Kassel (DE)
(72) Erfinder: Wiegrefe, Andreas, 36039 Fulda (DE); Hübner, Reinhard, 34130 Kassel (DE)

(57) **Zusammenfassung**

Die Erfindung betrifft einen Balg als Übergangsschutz für eine Übergangsbrücke zwischen zwei beweglich miteinander verbundenen Wagenkästen eines mehrteiligen Fahrzeugs oder zwischen zwei beweglich miteinander verbundenen Abschnitten einer Passagierbrücke oder einer Passagiertreppe, wobei der Balg ein Dach und zwei einander gegenüberliegend angeordnete Seitenwände aufweist, wobei zumindest die zwei Seitenwände oder das Dach oder ein Verbindungsbereich zwischen einer der zwei Seitenwände und dem Dach jeweils eine Mehrzahl von Falten oder Wellen aufweisen, wobei die Mehrzahl von Falten oder Wellen mindestens einen ersten Zuschnitt und einen mit dem ersten Zuschnitt verbundenen zweiten Zuschnitt aus einem biegbaren, bahnförmigen Material umfasst und der erste Zuschnitt und der zweite Zuschnitt zumindest abschnittsweise stoffschlüssig miteinander verbunden sind, wobei der erste Zuschnitt und der zweite Zuschnitt entlang einer ihrer Seiten einander überlappen oder aneinanderstoßen, wobei zwischen dem ersten Zuschnitt und dem zweiten Zuschnitt ein Klebstoff angeordnet ist, wobei der Klebstoff eine zumindest teilweise viskose Substanz und/oder ein Klebeband, vorzugsweise aus oder mit einem Elastomer, umfasst.

## Beschreibung

Die vorliegende Erfindung betrifft einen Balg als Übergangsschutz für eine Übergangsbrücke zwischen zwei beweglich miteinander verbundenen Wagenkästen eines mehrteiligen Fahrzeugs oder zwischen zwei beweglich miteinander verbundenen Abschnitten einer Passagierbrücke oder einer Passagiertreppe, wobei der Balg ein Dach und zwei einander gegenüberliegend angeordnete Seitenwände aufweist, wobei zumindest die zwei Seitenwände oder das Dach oder ein Verbindungsbereich zwischen einer der zwei Seitenwände und dem Dach jeweils eine Mehrzahl von Falten oder Wellen aufweisen, wobei die Mehrzahl von Falten oder Wellen mindestens einen ersten Zuschnitt und einen mit dem ersten Zuschnitt verbundenen zweiten Zuschnitt aus einem biegbaren, bahnförmigen Material umfasst.

Die vorliegende Erfindung betrifft zudem ein Verfahren zum Herstellen eines Balges als Übergangsschutz für eine Übergangsbrücke zwischen zwei beweglich miteinander verbundenen Wagenkästen eines mehrteiligen Fahrzeugs oder zwischen zwei beweglich miteinander verbundenen Abschnitten einer Passagierbrücke oder einer Passagiertreppe, wobei der Balg ein Dach oder zwei einander gegenüberliegend angeordnete Seitenwände aufweist, wobei das Verfahren die Schritte umfasst:
i) Bereitstellen eines ersten Zuschnitts aus einem biegbaren, bahnförmigen Material,
ii) Bereitstellen eines zweiten Zuschnitts aus einem biegbaren, bahnförmigen Material,
iii) Ausbilden zumindest der zwei Seitenwände oder des Dachs oder eines Verbindungsbereichs zwischen einer der zwei Seitenwände und dem Dach mit dem ersten und dem zweiten Zuschnitt, sodass zumindest jede der zwei Seitenwände oder das Dach oder der Verbindungsbereich zwischen einer der zwei Seitenwände und dem Dach eine Mehrzahl von Falten oder Wellen aufweist.

Bei öffentlichen Transportmitteln, wie Bussen und Bahnen, aber auch bei Passagierbrücken und Passagiertreppen, ist es üblich, den Übergang zwischen zwei Wagenkästen oder einem Flugzeug und dem Brücken- bzw. Treppenende für die Passagiere vor Wetter, Zugluft und anderen Umgebungseinflüssen zu schützen. Die dafür erforderlichen Bälge umschließen den Übergang zumindest im Bereich des Dachs und der einander gegenüberliegenden Seitenwände.

Der einzelne Balg ist dabei typischerweise zumindest im Bereich der Seitenwände, im Bereich des Dachs oder im einem Verbindungsbereich zwischen einer der zwei Seitenwände und dem Dach aus einem biegbaren, bahnförmigen Material aufgebaut, sodass der Balg Relativbewegungen zwischen den Wagenkästen oder den Abschnitten auszugleichen vermag.

Die aus dem Stand der Technik bekannten Bälge sind durch Vernähen einer Mehrzahl von Zuschnitten aus dem biegbaren, bahnförmigen Material gebildet. Beim Nähen wird das biegbare, bahnförmige Material mit Hilfe einer Nadel durchstoßen und ein Garn durch das Material hindurchgeführt. Dies macht es erforderlich, die so entstehenden Nähte nachträglich abzudichten. Andernfalls gelangen Feuchtigkeit und Verschmutzungen durch die Löcher in dem biegbaren, bahnförmigen Material in den eigentlich vom Balg geschützten Bereich. Das Ausbilden von Nähten ist aufwendig und führt nicht immer zu einem optisch einwandfreien Erscheinungsbild des Balges im Bereich der Naht.

Reine Erwähnungen von Klebungen ohne Nennung von Details zu deren Umsetzung finden sich im Stand der Technik beispielsweise in den Patentanmeldungen EP3210802 A1, EP4186771 A1 oder US6085403 A.

Daher ist es gegenüber dem Stand der Technik eine Aufgabe der vorliegenden Erfindung, einen Balg sowie ein Verfahren zum Herstellen eines solchen Balges bereitzustellen, welche zumindest einen der genannten Nachteile reduzieren oder vermeiden.

Die zuvor genannte Aufgabe wird erfindungsgemäß durch einen Balg mit den Merkmalen des unabhängigen Anspruchs 1 gelöst. Dazu sind bei einem Balg der eingangs genannten Art der erste Zuschnitt und der zweite Zuschnitt zumindest abschnittsweise stoffschlüssig miteinander verbunden. Der erste Zuschnitt und der zweite Zuschnitt überlappen dabei entlang einer ihrer Seiten oder stoßen aneinander, wobei zwischen dem ersten Zuschnitt und dem zweiten Zuschnitt ein Klebstoff angeordnet ist. Dieser Klebstoff kann sowohl eine zumindest teilweise viskose Substanz als auch ein selbstklebendes flächiges Element wie ein Band umfassen, wobei letzteres vorzugsweise aus oder mit einem Elastomer gebildet wird. Ist von der zumindest teilweise viskosen Substanz die Rede, soll vereinfachend im Folgenden teilweise verkürzt der Begriff "viskos" verwendet werden.

Die viskose Substanz als Klebstoff kann in verschiedenen Viskositätsgraden vorliegen, von flüssig bis dickflüssig. Das ermöglicht eine präzise Anpassung an die spezifischen Anforderungen des Balges. Viskose Klebstoffe können leicht in kleine Spalten und Unebenheiten eindringen, was eine gleichmäßige und starke Verbindung sicherstellt.

Klebstoffe, die Elastomere enthalten, bieten zusätzliche Flexibilität und Elastizität. Dies ist besonders vorteilhaft, wenn der Balg Bewegungen und Dehnungen ausgesetzt ist, da der Klebstoff diese Bewegungen absorbieren kann, ohne zu reißen oder sich zu lösen.

Selbstklebende Bänder wiederum sind einfach anzuwenden und erfordern keine speziellen Werkzeuge oder Aushärtezeiten. Dies reduziert den Herstellungsaufwand und beschleunigt den Produktionsprozess. Diese Bänder können in verschiedenen Breiten, Dicken und Materialkombinationen hergestellt werden, um spezifische Anforderungen zu erfüllen. Sie bieten eine gleichmäßige Klebeschicht, die eine konsistente Verbindung gewährleistet.

Sowohl viskose Klebstoffe als auch selbstklebende Bänder bieten eine starke und dauerhafte Verbindung zwischen den Zuschnitten. Dies erhöht die strukturelle Integrität des Balges. Viskose Klebstoffe und Bänder aus Elastomeren sind oft widerstandsfähig gegenüber extremen Temperaturen. Dies macht sie ideal für Anwendungen, bei denen der Balg hohen oder niedrigen Temperaturen ausgesetzt ist.

Überraschenderweise hat sich herausgestellt, dass eine stoffschlüssige Verbindung durch Kleben zwischen dem ersten und dem zweiten Zuschnitt ähnlich hohen Scherkräften standhält wie eine genähte Verbindung zwischen einem ersten und einem zweiten Zuschnitt. Durch den Entfall der Notwendigkeit, den ersten oder den zweiten Zuschnitt punktuell zu durchstoßen, so wie dies beim Nähen der Fall ist, ist erfindungsgemäß durch die erfindungsgemäße stoffschlüssige Verbindung keine zusätzlichen Nahtabdichtung mehr erforderlich. Dies verbessert auch die Optik des Balges.

Durch die Reduzierung der Bearbeitungsschritte beim Verbinden des ersten und des zweiten Zuschnitts kann insgesamt eine Reduzierung der Fertigungszeit, des Personalaufwands, des Materialaufwands und des Maschinenaufwands realisiert werden.

In einer Ausführungsform der Erfindung sind die zwei stoffschlüssig miteinander verbundenen Zuschnitte nicht zusätzlich formschlüssig miteinander verbunden. In einer weiteren Ausführungsform sind die beiden Zuschnitte ausschließlich stoffschlüssig miteinander verbunden.

In einer Ausführungsform der Erfindung sind der erste Zuschnitt und der zweite Zuschnitt zusätzlich zu dem Stoffschluss mithilfe eines Klemmprofils kraftschlüssig miteinander verbunden.

Grundsätzlich ist es möglich, die Erfindung zu realisieren, indem die stoffschlüssige Verbindung zwischen dem ersten Zuschnitt und dem zweiten Zuschnitt nur an einer der zwei Seitenwände oder an beiden Seitenwänden realisiert ist. Ebenso ist es möglich, den erfindungsgemäßen Balg nur dadurch zu realisieren, dass ein erster Zuschnitt und ein zweiter Zuschnitt des Daches zumindest abschnittsweise stoffschlüssig miteinander verbunden sind. Darüber hinaus ist es auch möglich, den Balg gemäß der vorliegenden Erfindung zu realisieren, indem ein erster Zuschnitt und ein zweiter Zuschnitt eines Verbindungsbereichs zwischen einer der zwei Seitenwände und dem Dach zumindest abschnittsweise schlüssig miteinander verbunden sind. Solche Verbindungsbereiche zwischen einer der zwei Seitenwände und dem Dach können Ecken oder Kanten des Balges sein.

Eine Falte oder eine Welle ist ein Abschnitt oder ein Segment der jeweiligen Seitenwand, des Dachs oder eines Verbindungsbereiches zwischen einer der zwei Seitenwände und dem Dach, welcher in einem Querschnitt einen Weg von der Innenseite des Balges in Richtung der Außenseite nach außen und wieder zurück oder umgekehrt beschreibt. Mehrere solcher Abschnitte oder Segmente können einen vollständigen Balg bilden. Für die Längserstreckung in Durchgangsrichtung des Balges sind dazu mehrere Falten respektive Wellen hintereinander angeordnet. Für einen den Durchgang umspannenden Balg können die Wellen oder Falten zum Beispiel fluchtend zueinander angeordnet und miteinander verbunden sein, etwa die Wellen einer Seitenwand und eines Dachs beziehungsweise eines Verbindungsabschnitts zum Dach.

Wellen und Falten bestehen aus einer (längeren) Längs- und einer (kürzeren) Querseite. Eine Welle weist einen Wellenscheitel am Punkt der Steigungsänderung auf. Außerdem gehen die einzelnen benachbarten Wellen über eine innere Wellenkante ineinander über.

In einer Ausführungsform weisen sowohl die zwei Seitenwände als auch das Dach und optional auch zwei Verbindungsabschnitte zwischen jeweils einer Seitenwand und dem Dach eine Mehrzahl von Falten oder Wellen auf.

Es ist möglich, den ersten Zuschnitt und den zweiten Zuschnitt nur abschnittsweise stoffschlüssig miteinander zu verbinden, während ein anderer Abschnitt eine nicht stoffschlüssige Verbindung aufweist. In einer Ausführungsform der Erfindung sind der erste Zuschnitt und der zweite Zuschnitt vollständig stoffschlüssig miteinander verbunden, d. h. alle Abschnitte der Verbindung sind zumindest auch, vorzugsweise aber ausschließlich stoffschlüssig ausgebildet.

In einer Ausführungsform der Erfindung ist der Balg ein Faltenbalg, wobei die Falten in einer Querschnittsebene zickzackförmig angeordnet sind. Jede Falte eines Faltenbalges hat in der Querschnittseben einen in etwa V-förmigen Verlauf. In einer Ausführungsform eines Faltenbalges weist jede Falte zwei näherungsweise gerade verlaufende Zuschnitte auf.

In einer Ausführungsform umfasst eine Falte genau zwei Zuschnitte, hier benannt mit erster Zuschnitt und zweiter Zuschnitt. Dabei sind in einer Ausführungsform der Erfindung der erste Zuschnitt und der zweite Zuschnitt im Scheitelpunkt der Falte miteinander verbunden. Jede Falte ist zudem ebenfalls mit zumindest einer benachbarten Falte verbunden. Sowohl die Verbindung zweier Zuschnitte am Scheitelpunkt einer Falte als auch die Verbindung einer Falte zur benachbarten Falte können erfindungsgemäß stoffschlüssig ausgestaltet sein.

In einer anderen Ausführungsform der Erfindung ist der Balg ein Wellenbalg, wobei jede Welle in einer Querschnittsebene bogenförmig verläuft. Die Wellen eines Wellenbalges haben in der Querschnittsebene einen in etwa U-förmigen Verlauf.

Eine Welle wird in einer Ausführungsform von genau einem Zuschnitt gebildet, der sich entweder von der Innenseite gekrümmt nach außen und dann wieder zur Innenseite zurück erstreckt oder umgekehrt. In einer Ausführungsform bildet der erste Zuschnitt eine erste Welle und der zweite Zuschnitt bildet eine zweite Welle, wobei der erste Zuschnitt und der zweite Zuschnitt stoffschlüssig miteinander verbunden sind, um die erste Welle an die zweite Welle anzubinden.

In einer Ausführungsform der Erfindung weisen der erste Zuschnitt und der zweite Zuschnitt jeweils eine Schmalseite und eine Längsseite auf. In einer Ausführungsform der Erfindung sind der erste Zuschnitt und der zweite Zuschnitt im Wesentlichen rechteckig. In einer Ausführungsform sind der erste Zuschnitt und der zweite Zuschnitt entlang ihrer Längsseiten miteinander verbunden.

Die Schmalseite eines Zuschnitts, der zum Ausbilden der Welle oder einer Falte einer der beiden Seitenwände dient, erstreckt sich im eingebauten Zustand des Balges im Wesentlichen parallel zu der Übergangsbrücke zwischen den Wagenkästen oder den Abschnitten der Passagierbrücke oder der Passagiertreppe. Bei einem Balg für eine Übergangsbrücke zwischen zwei beweglich miteinander verbundenen Wagenkästen erstreckt sich die Schmalseite eines solchen Zuschnitts der beiden Seitenwände im Wesentlichen horizontal. Demgegenüber erstrecken sich im eingebauten Zustand des Balges die Längsseite einer Falte oder Welle einer der Seitenwände im Wesentlichen vertikal bzw. senkrecht zu der Übergangsbrücke.

In einer Ausführungsform der Erfindung überlappen der erste Zuschnitt und der zweite Zuschnitt entlang einer ihrer Seiten, wobei zwischen dem ersten Zuschnitt und dem zweiten Zuschnitt ein Klebstoff angeordnet ist. In einer alternativen Ausführungsform stoßen der erste Zuschnitt und der zweite Zuschnitt entlang einer ihrer Seiten aneinander (d. h. sie überlappen nicht), wobei zwischen dem ersten Zuschnitt und dem zweiten Zuschnitt ein Klebstoff angeordnet ist.

In einer Ausführungsform der Erfindung umfasst das biegbare, bahnförmige Material ein Polymer. In einer Ausführungsform der Erfindung ist das Polymer ein Elastomer.

In einer weiteren Ausführungsform ist das Polymer des biegbaren bahnförmigen Materials ausgewählt aus einer Gruppe bestehend aus einem Ethylen-Propylen-Dien-Kautschuk (EPDM), einem Silikon-Kautschuk, einem chlorsulfonierten Polyethylen (CSM, z. B. Hypalon), einem Chloropren-Kautschuk (z. B. Neopren) und einem Ethylen-Vinylacetat-Copolymer (EVAC bzw. EVA) oder einer Kombination davon.

In einer Ausführungsform der Erfindung ist der Klebstoff ausgewählt aus einer Gruppe bestehend aus einem Elastomer-Klebstoff, einem Silikon-Kautschuk, einem Acrylat-Klebstoff (z. B. einem Cyanatacrylatkleber), einem Polyurethan-Klebstoff, einem Harzklebstoff (z.B. einem Resorzinharz), einem Dispersionsklebstoff und einem Polyvinylacetat-Klebstoff oder einer Kombination davon.

In einer Ausführungsform der Erfindung umfasst der Klebstoff ein Klebeband mit einem Silikon-Kautschuk.

In einer Ausführungsform der Erfindung weist das Klebeband eine Dicke von mindestens 0,1 mm, vorzugsweise von mindestens 0,3 mm und besonders bevorzugt von mindestens 0,5 mm auf. Es hat sich herausgestellt, dass die angegebenen Mindestdicken notwendig sind, um bei Zugbelastung, insbesondere bei Auftreten von Scherkräften, ein Aufbrechen der Klebeverbindung zu vermeiden. Die Dicke des Klebebands zwischen dem ersten Zuschnitt und dem zweiten Zuschnitt bestimmt die Elastizität der formschlüssigen Verbindung. In einer Ausführungsform der Erfindung weist das Klebeband eine Dicke von höchstens 3 mm auf. In einer Ausführungsform der Erfindung ist die Dicke des Klebebands kleiner als die Dicke des ersten Zuschnitts sowie kleiner als die Dicke des zweiten Zuschnitts. In einer Ausführungsform der Erfindung hat die Dicke des ersten Zuschnitts und/oder des zweiten Zuschnitts einen Wert in einem Bereich von 2,5 mm bis 3 mm.

In einer Ausführungsform der vorliegenden Erfindung sind die Basis des Polymers des biegbaren, bahnförmigen Materials des ersten Zuschnitts und des zweiten Zuschnitts sowie ein Polymer des Klebstoffs einander ähnlich. In einer Ausführungsform der Erfindung sind die Basis des Polymers des biegbaren, bahnförmigen Materials des ersten Zuschnitts und des zweiten Zuschnitts sowie ein Polymer des Klebstoffs identisch.

In einer Ausführungsform der Erfindung umfasst daherdas Klebeband ebenso ein Silikonelastomer wie das biegbare, bahnförmige Material des ersten und des zweiten Zuschnitts.

Eine Ähnlichkeit zwischen der Basis des Polymers des biegbaren, bahnförmigen Materials und des Polymers des Klebstoffs ist in einer Ausführungsform dann gegeben, wenn sowohl das Polymer des Klebstoffs als auch das Polymer der Zuschnitte jeweils eine breite, vorzugsweise einander ähnliche Molekulargewichtsverteilung aufweisen.

Eine Ähnlichkeit zwischen der Basis des Polymers des biegbaren, bahnförmigen Materials und des Polymers des Klebstoffs ist in einer Ausführungsform dann gegeben, wenn sowohl das Polymer des Klebstoffs als auch das Polymer des biegbaren, bahnförmigen Materials jeweils eine enge Molekulargewichtsverteilung aufweisen.

In einer Ausführungsform umfasst der Balg ein Dach und zwei einander gegenüberliegend angeordnete Seitenwände, wobei zumindest die zwei Seitenwände oder das Dach oder ein Verbindungsbereich zwischen einer der zwei Seitenwände und dem Dach jeweils eine Mehrzahl von Falten oder Wellen aufweist bzw. aufweisen, wobei die Mehrzahl von Falten oder Wellen mindestens einen ersten Zuschnitt und einen mit dem ersten Zuschnitt verbundenen zweiten Zuschnitt aus einem biegbaren, bahnförmigen Material umfasst, wobei der erste Zuschnitt und der zweite Zuschnitt zumindest abschnittsweise stoffschlüssig miteinander verbunden sind. Dabei ist zwischen dem ersten Zuschnitt und dem zweiten Zuschnitt ein Klebeband mit einem Silikon-Kautschuk und einer Dicke von mindestens 0,1 mm angeordnet. Der Balg ist dabei vorzugsweise erhalten durch ein Verfahren mit den Schritten: Bereitstellen des ersten Zuschnitts, Bereitstellen des zweiten Zuschnitts, Aufbringen des nicht vulkanisierten Klebebands auf den ersten Zuschnitt, Aufbringen des zweiten Zuschnitts auf das Klebeband und Vulkanisieren des Klebebands, wobei das Vulkanisieren die Schritte Zusammenpressen des ersten Zuschnitts, Zusammenpressen des zweiten Zuschnitts und des Klebebands und Einbringen von Wärme, Dampf, Druck (beispielsweise durch einen Autoklav) oder elektromagnetischer Strahlung in das Klebeband umfasst. Das zugehörige Verfahren wird weiter unten erläutert.

In einer Ausführungsform der Erfindung weist der Balg zusätzlich zu dem Dach und den zwei einander gegenüberliegend angeordneten Seitenwänden einen Boden auf. Dieser Boden erstreckt sich in einer Ausführungsform unter der Übergangsbrücke zwischen den Wagenkästen hindurch. In einer Ausführungsform der Erfindung weist auch der Boden eine Mehrzahl von Falten oder Wellen aus ersten und zweiten Zuschnitten aus dem biegbaren, bahnförmigen Material auf.

In einer Ausführungsform der Erfindung sind eine oder mehrere Wellen oder Falten des Bodens, der Seitenwände oder des Dachs des Balgs nur aus einem einzigen ersten Zuschnitt und einem einzigen zweiten Zuschnitt gebildet.

In einer Ausführungsform der Erfindung sind eine oder mehrere Wellen oder Falten des Bodens, der Seitenwände und des Dachs des Balgs nur aus einem einzigen ersten Zuschnitt und einem einzigen zweiten Zuschnitt gebildet, sodass im Wesentlichen zwei U-förmige Balgteile aus Seitenwänden, Dach und Boden durch einen ersten Zuschnitt und einen zweiten Zuschnitt verbunden werden. Hier werden die beiden Zuschnitte quer zur Längsachse der jeweiligen Welle oder Falte miteinander in Verbindung gebracht.

Die stoffschlüssige Verbindung kann also nach einer Ausführungsform der Erfindung längs entlang des Verlaufs einer Welle oder Falte erfolgen. Die Erfindung umfasst in einer Ausführungsform aber auch, dass die stoffschlüssige Verbindung quer hierzu hergestellt wird, um z. B. ganze 360 Grad umlaufende Wellen- oder Faltenhälften oder gar Balghälften aus mehreren zuvor bereits stoffschlüssig oder anders in Verbindung gebrachten Wellen oder Falten miteinander in Verbindung zu bringen.

Diese Verbindung von umlaufenden Wellen oder Falten bis hin zu ganzen Balghälften lässt sich bereits in der Balgfertigung einsetzen. Diese Lösung lässt eine kostengünstige und Komponenten sparende Alternative zum Stand der Technik zu: Der Balgstoff an den Enden einer Welle oder Falte wird nicht von Halterahmen aufgenommen, sondern die Wellen oder Falten sind stoffschlüssig miteinander verbunden. Halterahmen können optional beispielsweise im Endbereich des Balges vorgesehen sein als Montagerahmen zum Montieren des Balgs an die Stirnseiten der Fahrzeugteile sowie als Kuppelrahmen zum Kuppeln von zwei Balghälften in Fahrtrichtung nötig. Die meisten Halterahmen, nämlich alle Halterahmen zwischen zwei einzelnen Wellen oder Falten innerhalb eines Übergangsbalges, können wegfallen. Es wird durch das Verbinden zweier Hälften eine ausreichende Gesamtsteifigkeit erzeugt, um die bisherigen Halterahmen zu ersetzen. Die Steifigkeit und die innere Stabilität eines U-förmigen Balgteils sind aus zwei Gründen gegeben: Einerseits stabilisieren sich die in Form gebrachten Wellen oder Falten gegenseitig, was ein Zusammenfallen der Konstruktion verhindert. Andererseits basieren nach einer Ausführungsform der Erfindung die Balgmaterialien für z. B. Seitenwände, Dach oder Ecken auf verschiedenen elastomerbeschichteten Textilien. Die unterschiedlichen Textilien sind von ihren mechanischen Eigenschaften dabei entsprechend den Belastungen ausgelegt, die sie aufgrund ihrer Lage im Gesamtbalg ausgesetzt sind. Diese verschiedenen Textilien bzw. ihre mechanischen Eigenschaften können beispielsweise durch unterschiedliche Schussdichten im Textil erreicht werden.

Die wesentliche U-Form der Balgteile ist oft vorteilhaft, stellt aber keine Notwendigkeit dar. Stattdessen könnten die beiden zu verbindenden Hälften auch abschnittsweise oder ganz abgerundet, geschwungen, mit Unterbrechung des U ausgeformt sein. Die beiden Balghälften können nach einer Ausführungsform auch unterschiedliche Radien und unterschiedliche Längen in Durchgangsrichtung des Gesamtbalgs aufweisen.

Die Innenseite des Balges definiert den Übergang zwischen zwei gelenkig miteinander verbundener Fahrzeugen oder Fahrzeugteilen. Dabei kann der Balg umlaufend sein, was jedoch kein vollständiges Umlaufen zwingend voraussetzt.

In einer Ausführungsform der Erfindung weist der Balg an einer Stirnseite einen Montagerahmen zum Montieren des Balges an einem Wagenkasten des mehrteiligen Fahrzeugs oder an einem Abschnitt der Passagierbrücke oder der Passagiertreppe auf. In einer weiteren Ausführungsform der Erfindung weist der Balg an einer Stirnseite, insbesondere an der dem Flansch gegenüberliegenden Stirnseite, einen Kuppelrahmen zum Verbinden des Balges mit einem zweiten, an einem anderen Wagenkasten oder an einem anderen Abschnitt der Passagierbrücke oder der Passagiertreppe montierten Balg auf.

Die oben genannte Aufgabe wird zudem auch durch ein Übergangssystem mit einem Balg in einer Ausführungsform, so wie sie zuvor beschrieben wurden, und einer Übergangsbrücke gelöst. Ein solches Übergangssystem wird an die Hersteller von Eisenbahnwaggons oder Omnibuswagen als Zulieferteil bzw. -system geliefert.

Die vorliegende Erfindung betrifft in einer Ausführungsform auch ein Fahrzeug, insbesondere einen Eisenbahnwaggon oder einen Omnibuswagen, mit einem Wagenkasten, an dessen Stirnseite ein Balg gemäß einer Ausführungsform, so wie sie zuvor beschrieben wurden, so montiert ist.

Darüber hinaus betrifft die vorliegende Erfindung in einer Ausführungsform auch einen Abschnitt einer Passagierbrücke oder einer Passagiertreppe, an dessen Stirnseite ein Balg gemäß einer Ausführungsform, so wie sie zuvor beschrieben wurden, montiert ist.

In einer Ausführungsform der Erfindung ist der Balg erhältlich durch ein Verfahren mit den Schritten:
A) Bereitstellen des ersten Zuschnitts,
B) Bereitstellen des zweiten Zuschnitts,
C) Aufbringen eines Klebebands mit einem nicht-vulkanisierten Elastomer oder eines viskosen Klebstoffs auf den ersten Zuschnitt,
D) Aufbringen des zweiten Zuschnitts auf das Klebeband oder den viskosen Klebstoff derart, dass der erste Zuschnitt und der zweite Zuschnitt entlang einer ihrer Seiten einander überlappen oder aneinanderstoßen, und
E) Vulkanisieren zumindest des Klebebands oder des viskosen Klebstoffs und optional des ersten Zuschnitts oder des zweiten Zuschnitts.

Es hat sich gezeigt, dass das Bereitstellen des Klebebands zwischen dem ersten Zuschnitt und dem zweiten Zuschnitt als nicht-vulkanisiertes Halbzeug und nachfolgendes Vulkanisieren zumindest des Klebebands, eine dauerhaft elastische und hochgradig belastbare Verbindung zwischen dem ersten Zuschnitt und dem zweiten Zuschnitt erzeugt. Schlüssel dafür ist das Vulkanisieren des Klebebands im Kontakt mit dem ersten und dem zweiten Zuschnitt.

Die oben genannte Aufgabe wird ferner auch durch ein Verfahren gemäß dem beigefügten unabhängigen Anspruch 12 gelöst. Dazu weist das Verfahren folgende Verfahrensschritte auf:
i) Bereitstellen eines ersten Zuschnitts aus einem biegbaren, bahnförmigen Material,
ii) Bereitstellen eines zweiten Zuschnitts aus einem biegbaren, bahnförmigen Material, sodass der erste Zuschnitt und der zweite Zuschnitt entlang einer ihrer Seiten einander überlappen oder aneinanderstoßen und
iii) Ausbilden zumindest der zwei Seitenwände oder des Dachs oder eines Verbindungsbereichs zwischen einer der zwei Seitenwände und dem Dach mit dem ersten und dem zweiten Zuschnitt, so dass zumindest jede der Seitenwände oder das Dach oder der Verbindungsbereich eine Mehrzahl von Falten oder Wellen aufweist,
   dadurch gekennzeichnet, dass das Verfahren weiterhin den Schritt umfasst
iv) stoffschlüssiges Verbinden des ersten Zuschnitts und des zweiten Zuschnitts durch Aufbringen eines Klebstoffs in Form einer zumindest teilweise viskosen Substanz und/oder eines Klebebandes, vorzugsweise aus oder mit einem Elastomer.

In einer Ausführungsform der Erfindung umfasst das stoffschlüssige Verbinden in Schritt iv) die Schritte:
- Aufbringen eines Klebstoffs mit einem nicht vernetzten Polymer auf den ersten Zuschnitt,
- Aufbringen des zweiten Zuschnitts auf den Klebstoff und
- Vernetzen des Klebstoffs.

In einer weiteren Ausführungsform umfasst das stoffschlüssige Verbinden in Schritt iv) die Schritte:
- Aufbringen eines Klebebands mit einem nicht-vulkanisierten Elastomer auf den ersten Zuschnitt,
- Aufbringen des zweiten Zuschnitts auf das Klebeband und
- Vulkanisieren des Klebebands.

In einer Ausführungsform der Erfindung ist das biegbare, bahnförmige Material des ersten und des zweiten Zuschnitts bereits vor dem Aufbringen des Klebebands vulkanisiert.

In einer Ausführungsform der Erfindung wird das Vulkanisieren angestoßen durch Einbringen von Wärme oder elektromagnetischer Strahlung in das Klebeband.

In einer Ausführungsform der Erfindung erfolgt das Vulkanisieren zumindest des Klebebands unter Druck.

In einer Ausführungsform der Erfindung wird zumindest eine Oberfläche des ersten Zuschnitts oder eine Oberfläche des zweiten Zuschnitts, auf die das Klebeband aufgebracht wird, vor dem in Kontakt bringen mit dem Klebeband zumindest gereinigt, entfettet oder aufgeraut.

In einer Ausführungsform der Erfindung weist das Verfahren zusätzlich zumindest einen der Schritte auf:
v) Aufbringen eines Primers auf zumindest den ersten Zuschnitt in einem Bereich, in dem das Klebeband auf den ersten Zuschnitt aufgebracht wird, oder auf den zweiten Zuschnitt in einem Bereich, in dem der zweite Zuschnitt auf das Klebeband aufgebracht wird, oder
vi) Bereitstellen des Klebebands mit einem Primer.

Ein solcher Primer dient als Vorstrich oder Haftgrund zur Verbesserung der Adhäsion und/oder der Beständigkeit der Haftung des Klebebands an der Oberfläche des ersten und des zweiten Zuschnitts.

Weitere Vorteile, Merkmale und Anwendungsmöglichkeiten der vorliegenden Erfindung werden anhand der folgenden Beschreibung zweier Ausführungsformen und der zugehörigen Figuren deutlich. In den Figuren sind gleiche Elemente mit identischen Bezugszeichen bezeichnet.
- Figur 1: ist eine schematische Ansicht eines mehrteiligen Fahrzeugs mit einem erfindungsgemäßen Balg.
- Figur 2: ist eine schematische Querschnittsansicht durch einen Faltenbalg gemäß der vorliegenden Erfindung.
- Figur 3: ist eine schematische Querschnittsansicht durch einen Wellenbalg gemäß der vorliegenden Erfindung.
- Figur 4: ist vergrößerte eine schematische Querschnittsansicht der Verbindung zwischen zwei Zuschnitten in einem Balg der Figuren 2 oder 3.
- Figur 5: ist eine schematische Darstellung einer alternativen Verbindung zwischen zwei Zuschnitten in einem Balg der Figuren 2 oder 3.

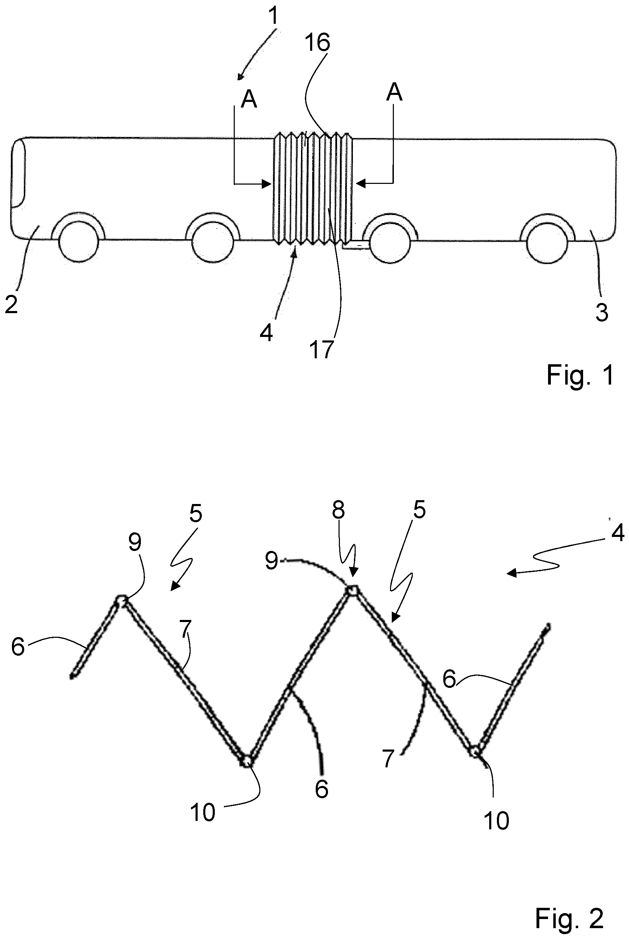

Figur 1 zeigt schematisch einen Bus 1 als mehrteiliges Fahrzeug im Sinne der vorliegenden Anmeldung. Der Bus besteht aus einem Vorderwagen 2 und einem Hinterwagen 3, die miteinander gekuppelt sind. Eine Übergangsbrücke ermöglicht es Passagieren, von dem Vorderwagen 2 in den Hinterwagen 3 und umgekehrt zu gelangen. Um diese Übergangsbrücke vor Umgebungseinflüssen zu schützen, dient ein erfindungsgemäßer Balg 4 als Übergangsschutz für die Übergangsbrücke. Der Balg besteht in diesem Ausführungsbeispiel aus Seitenwänden 17 und einem Dach 16.

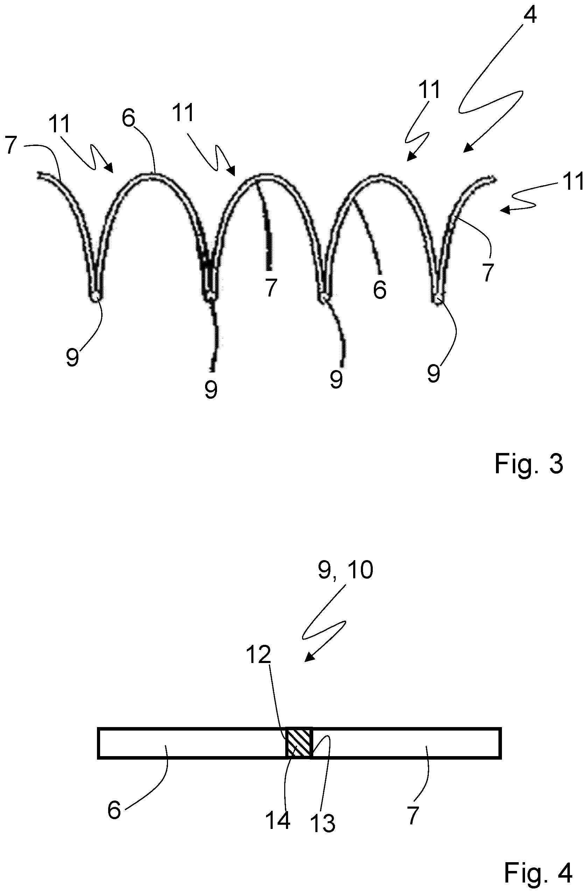

Derartige Bälge 4 sind typischerweise als Faltenbalg oder als Wellenbalg ausgestaltet. Figur 2 zeigt einen Querschnitt durch eine Seitenwand eines Faltenbalgs 4 entlang einer Schnittebene A-A aus Figur 1. Figur 3 zeigt einen Querschnitt durch eine Seitenwand eines Wellenbalgs 4 entlang einer Schnittebene A-A aus Figur 1.

Die Falten 5 des Faltenbalgs aus Figur 2 sind in der Schnittebene A-A aus Figur 1 zickzackförmig angeordnet. Jede Falte 5 hat in der Schnittebene A-A einen in etwa V-förmigen Verlauf. in der gezeigten Variante besteht jede Falte 5 aus genau zwei Zuschnitten, nämlich einem ersten Zuschnitt 6 und einem zweiten Zuschnitt 7 aus einem biegbaren, bahnförmigen Kautschuk. Dabei sind der erste Zuschnitt 6 und der zweite Zuschnitt 7 im Scheitelpunkt 8 der Falte 5 miteinander verbunden. Jede Falte 5 ist zudem ebenfalls mit zumindest einer benachbarten Falte 5 verbunden. Sowohl die Verbindung 9 des jeweiligen ersten und zweiten Zuschnitts 6, 7 im Scheitelpunkt 8 als auch die Verbindung 10 einer Falte 5 mit der benachbarten Falte 5 sind erfindungsgemäß stoffschlüssig ausgebildet. Denkbar und von dieser Erfindung mitumfasst sind jedoch auch Ausführungsformen, in denen nur eine stoffschlüssige Verbindung der Zuschnitte und nicht der Falten untereinander realisiert ist oder umgekehrt.

Bei einem Wellenbalg wie in Figur 3 dargestellt ist jede Welle 11 der Schnittebene A-A erkennbar bogenförmig. Die Wellen eines Wellenbalges haben in der Schnittebene A-A einen in etwa U-förmigen Verlauf.

Eine Welle 11 wird von genau einem Zuschnitt 6, 7 eines biegbaren, bahnförmigen Kautschuks gebildet, der sich entweder von der Innenseite gekrümmt nach außen und dann wieder zur Innenseite zurück oder mit Krümmung nach innen Richtung Fahrgastraum erstreckt. In der hier dargestellten Variante bildet der erste Zuschnitt 6 eine erste Welle 11 und der zweite Zuschnitt 7 bildet eine zweite Welle 11. Der erste Zuschnitt 6 und der zweite Zuschnitt 7 sind stoffschlüssig miteinander verbunden, um die erste Welle 11 an die zweite Welle 11 anzubinden.

Die Verbindungen 9, 10 zwischen den ersten und zweiten Zuschnitten 6, 7 sind bei den Falten und Wellenbälgen 4 aus dem Stand der Technik als herkömmliche Naht ausgebildet. Dabei sind Löcher in das bahnförmige Material der einzelnen Zuschnitte 6, 7 eingebracht und ein technisches Garn durch diese hindurchgeführt.

Demgegenüber verzichten die Verbindungen 9, 10 der Bälge 4 aus den Figuren 2 und 3 vollständig auf eine formschlüssige Verbindung und auch auf eine kraftschlüssige Verbindung. Sie sind stattdessen ausschließlich stoffschlüssig ausgeführt.

Figur 4 zeigt, wie diese stoffschlüssige Verbindung zwischen jeweils einem ersten und einem zweiten Zuschnitt 6, 7 bei dem Faltenbalg 4 aus Figur 2 ausgebildet ist. Zwischen den Stirnflächen 12, 13 der ersten und zweiten Zuschnitte 6, 7 ist in dieser Variante ein Acrylatklebstoff 14 vorgesehen.

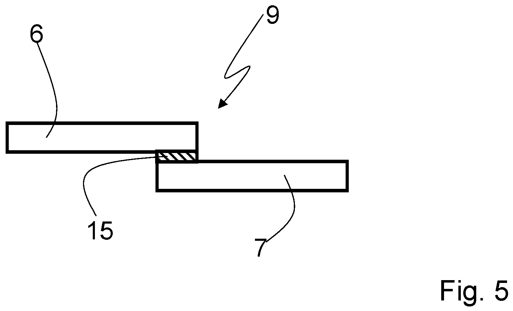

In Figur 5 ist demgegenüber dargestellt, wie die stoffschlüssige Verbindung zwischen jeweils einem ersten und einem zweiten Zuschnitt 6, 7 bei dem Wellenbalg 4 aus Figur 3 ausgebildet sein könnte. Zwischen dem ersten Zuschnitt 6 und dem zweiten Zuschnitt 7 ist ein Klebeband 15 aus einem Kautschuk mit einer Dicke von 0,2 mm angeordnet. Zum Herstellen der Verbindung 9 wurden zunächst der erste Zuschnitt 6 und der zweite Zuschnitt 7 bereitgestellt. Auf den ersten Zuschnitt 6 wurde das noch nicht vulkanisierte Klebeband 15 aufgebracht. Auf das Klebeband 15 wiederum wurde der zweite Zuschnitt 7 aufgebracht und abschließend das Klebeband 15 unter Einwirkung von Druck durch Einbringen von Wärme in das Klebeband 15 vulkanisiert.

Für Zwecke der ursprünglichen Offenbarung wird darauf hingewiesen, dass sämtliche Merkmale, wie sie sich aus der vorliegenden Beschreibung, den Zeichnungen und den Ansprüchen für eine Fachperson erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für die Fachperson aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Bus
- 2: Vorderwagen
- 3: Hinterwagen
- 4: Balg
- 5: Falte
- 6: erster Zuschnitt
- 7: zweiter Zuschnitt
- 8: Scheitelpunkt der Falte
- 9, 10: Verbindung
- 11: Welle
- 12, 13: Stirnfläche
- 14: Acrylatklebstoff
- 15: Klebeband
- 16: Dach
- 17: Seitenwand

## Patentansprüche

1. Balg (4) als Übergangsschutz für eine Übergangsbrücke zwischen zwei beweglich miteinander verbundenen Wagenkästen (2, 3) eines mehrteiligen Fahrzeugs (1) oder zwischen zwei beweglich miteinander verbundenen Abschnitten einer Passagierbrücke oder einer Passagiertreppe, wobei der Balg (4)
ein Dach (16) und
zwei einander gegenüberliegend angeordnete Seitenwände (17) aufweist,
wobei zumindest die zwei Seitenwände (17) oder das Dach (16) oder ein Verbindungsbereich zwischen einer der zwei Seitenwände (17) und dem Dach (16) jeweils eine Mehrzahl von Falten (5) oder Wellen (11) aufweisen,
wobei die Mehrzahl von Falten (5) oder Wellen (11) mindestens einen ersten Zuschnitt (6) und einen mit dem ersten Zuschnitt (6) verbundenen zweiten Zuschnitt (7) aus einem biegbaren, bahnförmigen Material umfasst,
wobei der erste Zuschnitt (6) und der zweite Zuschnitt (6) zumindest abschnittsweise stoffschlüssig miteinander verbunden sind,
**dadurch gekennzeichnet, dass**
der erste Zuschnitt (6) und der zweite Zuschnitt (7) entlang einer ihrer Seiten einander überlappen oder aneinanderstoßen, wobei zwischen dem ersten Zuschnitt (6) und dem zweiten Zuschnitt (7) ein Klebstoff (14, 15) angeordnet ist,
wobei der Klebstoff eine zumindest teilweise viskose Substanz und/oder ein Klebeband (15), vorzugsweise aus oder mit einem Elastomer, umfasst.

2. Balg nach Anspruch 1,
wobei der erste und der zweite stoffschlüssig miteinander verbundene Zuschnitt (6, 7) nicht formschlüssig miteinander verbunden sind.

3. Balg nach einem der vorhergehenden Ansprüche, wobei das biegbare, bahnförmige Material ein Polymer umfasst, wobei das Polymer vorzugsweise ein Elastomer ist und wobei besonders bevorzugt das Polymer ausgewählt ist aus einer Gruppe bestehend aus einem Ethylen-Propylen-Dien-Kautschuk, einem Silikon-Kautschuk, einem chlorsulfonierten Polyethylen, einem Chloropren-Kautschuk und einem Ethylen-Vinylacetat-Copolymer oder einer Kombination davon.

4. Balg nach einem der vorhergehenden Ansprüche, wobei der Klebstoff ausgewählt ist aus einer Gruppe bestehend aus einem Elastomer-Klebstoff, einem Silikon-Kautschuk, einem Acrylat-Klebstoff, einem Polyurethan-Klebstoff, einem Harzklebstoff, einem Dispersionsklebstoff und einem Polyvinylacetat-Klebstoff oder einer Kombination davon.

5. Balg nach einem der vorhergehenden Ansprüche, wobei das Klebeband (15) eine Dicke von mindestens 0,1 mm, vorzugsweise von mindestens 0,3 mm und besonders bevorzugt von mindestens 0,5 mm aufweist.

6. Balg nach einem der vorhergehenden Ansprüche, wobei die Basis des Polymers des ersten und des zweiten Zuschnitts (6, 7) sowie ein Polymer des Klebstoffs einander ähnlich sind, vorzugsweise identisch sind.

7. Balg nach einem der vorhergehenden Ansprüche, wobei eine oder mehrere Wellen oder Falten des Balgs nur aus einem einzigen ersten Zuschnitt und einem einzigen zweiten Zuschnitt gebildet wird/werden.

8. Balg nach einem der vorhergehenden Ansprüche, wobei im Wesentlichen zwei u-förmige Balgteile aus Seitenwänden, Dach und Boden durch einen ersten Zuschnitt und einen zweiten Zuschnitt verbunden werden.

9. Balg (4) nach einem der vorhergehenden Ansprüche, wobei der Balg (4) bereitgestellt wird durch ein Verfahren mit den Schritten
A) Bereitstellen des ersten Zuschnitts (6),
B) Bereitstellen des zweiten Zuschnitts (7),
C) Aufbringen eines Klebebands (15) mit einem nicht vulkanisierten Elastomer oder eines viskosen Klebstoffs auf den ersten Zuschnitt (6),
D) Aufbringen des zweiten Zuschnitts (7) auf das Klebeband (15) oder den viskosen Klebstoff derart, dass der erste Zuschnitt (6) und der zweite Zuschnitt (7) entlang einer ihrer Seiten einander überlappen oder aneinanderstoßen und
E) Vulkanisieren zumindest des Klebebands (15) oder des viskosen Klebstoffs und optional des ersten Zuschnitts (6) oder des zweiten Zuschnitts (7).

10. Übergang für eine Übergangsbrücke zwischen zwei beweglich miteinander verbundenen Wagenkästen (2, 3) eines mehrteiligen Fahrzeugs (1) oder zwischen zwei beweglich miteinander verbundenen Abschnitten einer Passagierbrücke oder einer Passagiertreppe, mit einem Balg (4) nach einem der vorherigen Ansprüche.

11. Mehrteiliges Fahrzeug mit einer Übergangsbrücke zwischen zwei beweglich miteinander verbundenen Wagenkästen (2, 3) eines mehrteiligen Fahrzeugs (1) mit einem Übergang nach einem der vorherigen Ansprüche.

12. Verfahren zum Herstellen eines Balges (4) als Übergangsschutz für eine Übergangsbrücke zwischen zwei beweglich miteinander verbundenen Wagenkästen (2, 3) eines mehrteiligen Fahrzeugs (1) oder zwischen zwei beweglich miteinander verbundenen Abschnitten einer Passagierbrücke oder einer Passagiertreppe, wobei der Balg (4) ein Dach (16) und zwei einander gegenüberliegend angeordnete Seitenwände (17) aufweist, wobei das Verfahren die Schritte umfasst
i) Bereitstellen eines ersten Zuschnitts (6) aus einem biegbaren, bahnförmigen Material,
ii) Bereitstellen eines zweiten Zuschnitts (7) aus einem biegbaren, bahnförmigen Material, sodass der erste Zuschnitt (6) und der zweite Zuschnitt (7) entlang einer ihrer Seiten einander überlappen oder aneinanderstoßen und
iii) Ausbilden zumindest der zwei Seitenwände (17) oder des Dachs (16) oder eines Verbindungsbereichs zwischen einer der zwei Seitenwände (17) und dem Dach (16) mit dem ersten und dem zweiten Zuschnitt (6, 7), so dass zumindest jede der Seitenwände (17) oder das Dach (16) oder der Verbindungsbereich eine Mehrzahl von Falten (5) oder Wellen (11) aufweist,
**dadurch gekennzeichnet, dass** das Verfahren weiterhin den Schritt umfasst
iv) stoffschlüssiges Verbinden des ersten Zuschnitts (6) und des zweiten Zuschnitts (7) durch Aufbringen eines Klebstoffs (14) in Form einer zumindest teilweise viskosen Substanz und/oder eines Klebebandes (15), vorzugsweise aus oder mit einem Elastomer.

13. Verfahren nach dem vorhergehenden Anspruch, wobei das stoffschlüssige Verbinden in Schritt iv) die Schritte umfasst
Aufbringen eines Klebebands (15) mit einem nicht vulkanisierten Elastomer auf den ersten Zuschnitt (6),
Aufbringen des zweiten Zuschnitts (7) auf das Klebeband (15) und
Vulkanisieren des Klebebands (15).

14. Verfahren nach einem der Ansprüche 12 oder 13, wobei zumindest eine Oberfläche des ersten Zuschnitts (6) oder eine Oberfläche des zweiten Zuschnitts (7), auf die das Klebeband (15) aufgebracht wird, vor dem in Kontakt Bringen mit dem Klebeband (15) zumindest gereinigt, entfettet oder aufgeraut wird.

15. Verfahren nach einem der Ansprüche 12 bis 14, wobei das Verfahren zusätzlich zumindest einen der Schritte aufweist
v) Aufbringen eines Primers auf zumindest den ersten Zuschnitt (6) in einem Bereich, in dem das Klebeband (15) auf den ersten Zuschnitt (6) aufgebracht wird, oder auf den zweiten Zuschnitt (7) in einem Bereich, in dem der zweite Zuschnitt (7) auf das Klebeband (15) aufgebracht wird, oder
vi) Bereitstellen des Klebebands (15) mit einem Primer.
